# EUROPEAN PATENT APPLICATION

(11) **EP 3 085 746 A1**
(43) Date of publication of application: **26.10.2016**
(21) Application number: 14872169.9
(22) Date of filing: 11.12.2014
(51) Int. Cl.: C09D 17/00, B41J 2/01, B41M 5/00, C09B 67/46, C09D 11/10, C09D 11/322

(54) **AQUEOUS PIGMENT COMPOSITION AND PIGMENT INK**

(30) Priority: 19.12.2013 JP 2013262458
(71) Applicant: DIC Corporation, Tokyo 174-8520 (JP)
(72) Inventor: FUKUI Hiroyuki, Kitaadachi-gun Saitama 362-8577 (JP); SHOJI Yuri, Kitaadachi-gun Saitama 362-8577 (JP); HOSAKA Masaki, Kitaadachi-gun Saitama 362-8577 (JP); WATANABE Masaki, Takaishi-shi Osaka 592-0001 (JP); OHMURA Ryosuke, Takaishi-shi Osaka 592-0001 (JP)
(74) Representative: TBK
(86) International application number: PCT/JP2014/082826
(87) International publication number: WO 2015/093387

(57) **Abstract**

An aqueous pigment composition contains a pigment, water, and an acrylic resin obtained by copolymerizing a silane coupling agent having an ethylenically unsaturated group and a polymerizable monomer having an amide group. Relative to a total amount of monomers used in copolymerization, the acrylic resin uses 0.05% by mass or more and not more than 2% by mass of the silane coupling agent having an ethylenically unsaturated group, and 0.5% by mass or more and not more than 5% by mass of the polymerizable monomer having an amide group.

## Description

### Technical Field

The present invention relates to an aqueous pigment composition and a pigment ink using the aqueous pigment composition.

### Background Art

Pigment compositions that use pigments as colorants are being used in various indoor and outdoor applications owing to pigments' superior lightfastness. The applications include automobile and building material paint applications, and ink applications such as offset ink, gravure ink, flexo ink, silk-screen ink, and inkjet recording ink.

In particular, aqueous inks that use water as a main solvent are favored since aqueous inks can reduce or avoid risk for fire and mutagenicity associated with solvent inks that use organic solvents; thus, presently, development on the aqueous pigment inks is being actively pursued.

Since aqueous inks dry slower than solvent inks, there has been a problem of a low print fixability when the printing medium is plastic or metal that does not absorb water or coated paper or art paper having high hydrophobicity. However, merely improving the drying property of aqueous ink is not favorable since ink with an excessively high drying rate solidifies on the plate during printing and inhibits printing. Moreover, as for inkjet recording ink, images are recorded by discharging ink droplets from nozzles as fine as several ten micrometers, and thus inks drying and solidifying at the nozzle tips may directly damage discharge stability.

Another problem is the physical properties of the obtained print. In particular, when the printing medium is plastic, metal, coated paper, or art paper, for example, rubfastness tends to be low compared to prints made on regular paper.

As an approach to improving rubfastness of aqueous inks, there has been known addition of binder resins to aqueous inks. For example, in PTL 1, the fixability of the aqueous inkjet ink is improved by using a binder resin. PTL 2 discloses a composition of a binder with which the dried and solidified inkjet recording ink at nozzle tips can be redispersed in the ink composition by supplying ink in a liquid form (see PTL 2, paragraph 0031).

According to these approaches, the fixability of the print can be improved, or the solidified ink can be redispersed in the ink composition.

In the inkjet recording ink applications, the following techniques are known to improve the rubfastness of the image surface. That is, in order to improve the rubfastness of the image surface, an acrylic silicon resin is used or an acrylic silicon resin and a binder resin other than the acrylic silicon resin are used in combination (for example, see PTL 3 and PTL 4). Moreover, a copolymer having a mass-average molecular weight of 12,000 to 35,000 and an acid value of 100 to 250 mgKOH/g and being prepared by copolymerizing 30 to 83% by mass of (α-methyl)styrene and/or an aromatic-group-containing (meth)acrylic acid ester as a first monomer, 40 to 12% by mass of (meth)acrylic acid as a second monomer, and 30 to 5% by mass of an alkylene oxide group-containing (meth)acrylic acid ester represented by general formula 1 below as a third monomer is used (for example, refer to PTL 5).

### Citation List

### Patent Literature

PTL 1: Japanese Unexamined Patent Application Publication No. 2011-12253
PTL 2: Japanese Unexamined Patent Application Publication No. 2007-197640
PTL 3: Japanese Unexamined Patent Application Publication No. 2008-284874
PTL 4: Japanese Unexamined Patent Application Publication No. 2013-194161
PTL 5: Japanese Unexamined Patent Application Publication No. 2013-91734

### Summary of Invention

### Technical Problem

An object of the present invention is to provide an aqueous pigment composition that can be applied to aqueous pigment inks, has an appropriate drying rate and excellent re-dispersibility, and offers an image surface with excellent rubfastness even when a printing medium is plastic or metal that does not absorb water or coated paper or art paper having high hydrophobicity, for example. Solution to Problem

The inventors of the present invention have resolved the problems described above by using, as a binder, an acrylic resin prepared by copolymerizing particular amounts of a silane coupling agent having an ethylenically unsaturated group and a polymerizable monomer having an amide group.

In other words, the present invention provides an aqueous pigment composition that contains a pigment, water, and an acrylic resin obtained by copolymerizing a silane coupling agent having an ethylenically unsaturated group and a polymerizable monomer having an amide group. Relative to a total amount of monomers used in copolymerization, the acrylic resin uses 0.05% by mass or more and not more than 2% by mass of the silane coupling agent having an ethylenically unsaturated group, and 0.5% by mass or more and not more than 5% by mass of the polymerizable monomer having an amide group.

The present invention also provides a pigment ink that uses the aqueous pigment composition.

### Advantageous Effects of Invention

According to the present invention, an aqueous pigment composition is provided which can be applied to aqueous pigment inks, has an appropriate drying rate and excellent re-dispersibility, and offers an image surface with excellent rubfastness even when a printing medium is plastic or metal that does not absorb water or coated paper or art paper having high hydrophobicity, for example. Description of Embodiments

### (Pigment)

The pigment used in the present invention is not particularly limited, and common organic pigments and inorganic pigments used in aqueous gravure inks or aqueous inkjet recording inks can be used. Both unprocessed pigments and processed pigments can be used. In printing using a plastic recording medium, white ink is also used to enhance visibility in addition to yellow ink, cyan ink, magenta ink, black ink, etc.

Specifically, known inorganic pigments and organic pigments that can be dispersed in water or water-soluble organic solvents can be used. Examples of the inorganic pigment include iron oxide, and carbon black prepared by known methods such as a contact method, a furnace method, and a thermal method. Examples of the organic pigment include azo pigments (azo lake, insoluble azo pigments, condensed azo pigments, chelate azo pigments, etc.), polycyclic pigments (for example, phthalocyanine pigments, perylene pigments, perinone pigments, anthraquinone pigments, quinacridone pigments, dioxazine pigments, thioindigo pigments, isoindolinone pigments, and quinophthalone pigments), dye chelates (for example, basic dye-type chelates and acidic dye-type chelates), nitro pigments, nitroso pigments, and aniline black.

As the pigment used in black ink, examples of the carbon black include No. 2300, No. 2200B, No. 900, No. 960, No. 980, No. 33, No. 40, No. 45, No. 45L, No. 52, HCF88, MA7, MA8, and MA100 produced by Mitsubishi Chemical Corporation, Raven 5750, Raven 5250, Raven 5000, Raven 3500, Raven 1255, and Raven 700 produced by Columbian Chemicals Co., Regal 400R, Regal 330R, Regal 660R, Mogul L, Mogul 700, Monarch 800, Monarch 880, Monarch 900, Monarch 1000, Monarch 1100, Monarch 1300, and Monarch 1400 produced by Cabot Corporation, Color Black FW1, FW2, FW2V, FW18, FW200, S150, S160, and S170, Printex 35, U, V, and 1400U, Special Black 6, 5, 4, and 4A, NIPEX 150, NIPEX 160, NIPEX 170, and NIPEX 180 produced by DEGUSSA AG.

Specific examples of the pigments used in yellow ink include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

Specific examples of the pigments used in magenta ink include C.I. Pigment Red 5, 7, 12, 48(Ca), 48(Mn), 57(Ca), 57:1, 112, 122, 123, 146, 168, 176, 184, 185, 202, 209, 269, and 282, and C.I. Pigment Violet 19.

Specific examples of the pigments used in cyan ink include C.I. Pigment Blue 1, 2, 3, 15, 15:3, 15:4, 16, 22, 60, 63, and 66.

Specific examples of the pigments used in white ink include sulfates and carbonates of alkaline earth metals, and silicas such as fine powdered silicate and synthetic silicate, calcium silicate, alumina, alumina hydrates, titanium oxide, zinc oxide, talc, and clay. The inorganic white pigment may be surface-treated through various surface-treatment methods.

The pigment is preferably subjected to a process that makes the pigment satisfactorily dispersible in a water-soluble solvent and/or water serving as a medium in order to stabilize the pigment in the aqueous pigment composition.

Specifically, the pigment may be dispersed in a water-soluble solvent and/or water along with a common pigment dispersing agent such as a polymer dispersing agent, a surfactant, or a pigment derivative by the dispersing method described below so as to form an aqueous pigment composition. Alternatively, a dispersibility-imparting group (hydrophilic functional group and/or a salt thereof) may be bonded to a pigment surface either directly or indirectly via an alkyl group, an alkyl ether group, an aryl group, or the like so as to process the pigment into a self-dispersing pigment that disperses and/or dissolves in a water-soluble solvent and/or water without using a common pigment dispersing agent, this self-dispersing pigment may be dispersed in a water-soluble solvent and/or water so as to form a pigment dispersion, and this pigment dispersion may be blended with the aqueous pigment ink.

### (Pigment dispersing agent)

The pigment dispersing agent used in the present invention is not particularly limited, and a polymer dispersing agent, a surfactant, or a pigment derivative known in the art can be used.

Among the pigment dispersing agents, aqueous resins are particularly preferable. Preferable examples include polyvinyl alcohols, polyvinyl pyrrolidones, acrylic resins such as acrylic acid-acrylic acid ester copolymers, styrene-acrylic resins such as styrene-acrylic acid copolymers, styrene-methacrylic acid copolymers, styrene-methacrylic acid-acrylic acid ester copolymers, styrene-α-methylstyrene-acrylic acid copolymers, and styrene-α-methylstyrene-acrylic acid-acrylic acid ester copolymers, styrene-maleic acid copolymers, styrene-maleic anhydride copolymers, vinylnaphthalene-acrylic acid copolymers, and salts of the aqueous resins.

Examples of the compound used to form salts of the copolymers include alkali metal hydroxides such as sodium hydroxide, potassium hydroxide, and lithium hydroxide, diethylamine, ammonia, ethylamine, triethylamine, propylamine, isopropylamine, dipropylamine, butylamine, isobutylamine, triethanolamine, diethanolamine, aminomethylpropanol, and morpholine. The amount of the compound used to form these salts is preferably equal to or more than the neutralization equivalent of the copolymer.

Naturally, commercially available products can be used. Examples of the commercially available products include AJISPER PB series produced by Ajinomoto Fine-Techno Co., Inc., Disperbyk series produced by BYK Chemie Japan, EFKA series produced by BASF, SOLSPERSE series produced by The Lubrizol Corporation Japan, and TEGO series produced by EVONIK Industries.

### (Self-dispersing pigment)

A self-dispersing pigment that can be dispersed in an water-soluble solvent or water without using a pigment dispersing agent is produced by performing a physical treatment or chemical treatment on a pigment so as to bond (graft) a dispersibility-imparting group or an active species having a dispersibility-imparting group to a surface of the pigment. Examples of the method include a vacuum plasma treatment, an oxidation treatment using hypohalous acid and/or hypohalite, an oxidation treatment using ozone, a wet oxidation method involving oxidizing the pigment surface with an oxidizer in water, and a method of bonding p-aminobenzoic acid to the pigment surface so that a carboxyl group is bonded through a phenyl group.

An aqueous ink containing a self-dispersing pigment does not have to contain a pigment dispersing agent and thus is substantially free of bubbles caused by the pigment dispersing agent and can be easily prepared into an ink having excellent discharge stability. Because a significant increase in viscosity caused by the pigment dispersing agent is suppressed, more pigment can be contained and the print density can be sufficiently increased or handling is facilitated. Due to these advantages, the self-dispersing pigment is particularly useful for an inkjet recording ink that requires high concentration.

Commercially available products can be used as the self-dispersing pigment. Examples of the commercially available products include MICROJET CW-1 (trade name, produced by Orient Chemical Industries Co., Ltd.), and CAB-O-JET200 and CAB-O-JET300 (trade name, produced by Cabot Corporation).

### (Water)

Water used in the present invention is a dispersing medium of a pigment. Examples of the water that can be used include pure water and ultrapure water such as ion exchange water, ultrafiltration water, reverse osmosis water, and distilled water.

Water may be used alone or a mixed solvent containing water and a water-soluble solvent may be used. Examples of the solvent include ketones such as acetone, methyl ethyl ketone, methyl butyl ketone, and methyl isobutyl ketone; alcohols such as methanol, ethanol, 2-propanol, 2-methyl-1-propanol, 1-butanol, and 2-methoxyethanol; ethers such as tetrahydrofuran, 1,4-dioxane, and 1,2-dimethoxyethane; glycols such as dimethylformamide, N-methylpyrrolidone, ethylene glycol, diethylene glycol, triethylene glycol, tetraethylene glycol, propylene glycol, polyethylene glycol, and polypropylene glycol; diols such as butanediol, pentanediol, hexanediol, and diols of the same family; glycol esters such as propylene glycol laurate; ethers of diethylene glycol monoethyl, diethylene glycol monobutyl, and diethylene glycol monohexyl, and glycol ethers such as cellosolve including propylene glycol ether, dipropylene glycol ether, and triethylene glycol ether; alcohols such as methanol, ethanol, isopropyl alcohol, 1-propanol, 2-propanol, 1-butanol, 2-butanol, butyl alcohol, pentyl alcohol, and alcohols of the same family; sulfolane; lactones such as γ-butyrolactone; lactams such as N-(2-hydroxyethyl) pyrrolidone; glycerin and derivatives thereof; and other various types of solvents known as water-soluble organic solvents. These water-soluble organic solvents can be used alone or as a mixture of two or more.

The water-soluble organic solvent used is preferably a high-boiling-point water-soluble organic solvent since there is no need for a debinding agent in the subsequent step. Examples of the high-boiling-point water-soluble organic solvent include glycols such as ethylene glycol, diethylene glycol, triethylene glycol, tetraethylene glycol, propylene glycol, polyethylene glycol, and polypropylene glycol; diols such as butanediol, pentanediol, hexanediol, and diols of the same family; glycol esters such as propylene glycol laurate; ethers of diethylene glycol monoethyl, diethylene glycol monobutyl, and diethylene glycol monohexyl, and glycol ethers such as cellosolve including propylene glycol ether, dipropylene glycol ether, and triethylene glycol ether; sulfolane; lactones such as γ-butyrolactone; lactams such as N-(2-hydroxyethyl)pyrrolidone; glycerin and its derivatives; and other various types of solvents known as water-soluble organic solvents. These water-soluble organic solvents can be used alone or as a mixture of two or more.

### (Acrylic resin obtained by copolymerizing a silane coupling agent having an ethylenically unsaturated group and a polymerizable monomer having an amide group)

The acrylic resin obtained by copolymerizing a silane coupling agent having an ethylenically unsaturated group and a polymerizable monomer having an amide group (hereinafter this acrylic resin may be referred to as the acrylic resin (A); note that for the purposes of the present invention, the "acrylic resin" is a general term for copolymers that contain a monomer having a (meth)acryloyl group as one of the raw materials, where the (meth)acryloyl group is a general term for an acryloyl group and a methacryloyl group) can be any acrylic resin that uses as raw material polymerizable monomers a silane coupling agent having an ethylenically unsaturated group and a polymerizable monomer having an amide group.

Examples of the silane coupling agent having an ethylenically unsaturated group include vinyltriethoxysilane, vinyltrimethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane.

The silane coupling agent having an ethylenically unsaturated group gives a crosslinked structure to the acrylic resin (A) to be obtained. In the present invention, in order to display a favorable binder function during printing, the amount of the silane coupling agent having an ethylenically unsaturated group used is preferably 0.05% by mass or more but not more than 2% by mass relative to the total amount of monomers (this may contain a monomer that has plural ethylenically unsaturated groups in one molecule, and may be a mixture of another vinyl monomer, a silane coupling agent having an ethylenically unsaturated group, etc.) used as raw materials for copolymerization. The amount is more preferably 0.05 to 1.5% by mass and most preferably 0.1 to 1.0% by mass.

The acrylic monomer having an amide group has an effect of improving re-dispersibility of the aqueous pigment composition of the present invention. The acrylic resin (A) strikes a good balance between hydrophilicity and hydrophobicity and is stable in a water-soluble solvent and/or water.

The acrylic monomer having an amide group may cause an imbalance of hydrophilicity and hydrophobicity in the acrylic resin (A) and may generate a crosslinked structure if its content in the acrylic resin is excessively large, which leads to a tendency of decreasing re-solubility and decreasing rubfastness. Thus, the content of the acrylic monomer having an amide group is preferably not more than 5% by mass relative to the total amount of the monomers used in copolymerization. Specifically, 0.5% by mass or more but not more than 5% by mass of the acrylic monomer having an amide group is preferably used relative to the total amount of raw material monomers used in copolymerization. The amount is more preferably 0.5 to 4% by mass and most preferably 1.5 to 3% by mass.

Examples of the acrylic monomer having an amide group include (meth)acrylamide, N-methyl(meth)acrylamide, N-ethyl(meth)acrylamide, N-propyl(meth)acrylamide, N-methylol(meth)acrylamide, N-isopropyl(meth)acrylamide, N-butyl(meth)acrylamide, N,N-dimethyl(meth)acrylamide, N,N-diethyl(meth)acrylamide, N,N-dipropyl(meth)acrylamide, N,N-dimethylaminopropyl(meth)acrylamide, diacetone(meth)acrylamide, and hydroxyethyl(meth)acrylamide.

From the viewpoint of adhesion to plastic or metal that does not absorb water and highly hydrophobic coated paper or art paper, the acrylic resin (A) may contain a component whose molecular weight is difficult to measure because the component is insoluble in tetrahydrofuran (THF) used as an eluent during gel permeation chromatography molecular-weight measurement.

The component insoluble in THF used as the eluent in gel permeation chromatography molecular-weight measurement of acrylic resins such as the acrylic resin (A) can be deemed to have a number-average molecular weight of at least 100,000 and a mass-average molecular weight of at least 500,000.

As the other acrylic monomer used as the raw material of the acrylic resin (A), any known polymerizable monomers can be used without limitation.

Examples thereof include (meth)acrylic acid ester monomers such as (meth)acrylic acid and alkali metal salts thereof, methyl (meth)acrylate, ethyl (meth)acrylate, butyl (meth)acrylate, 2-ethylhexyl (meth)acrylate, benzyl (meth)acrylate, and cyclohexyl (meth)acrylate, amide-group-containing acrylic monomers such as acrylamide and N,N-dimethyl(meth)acrylamide, and acrylic monomers such as (meth)acrylonitrile, 2-dimethylaminoethyl (meth)acrylate, and glycidyl (meth)acrylate.

The monomer other than the acrylic monomers may be any monomer that has an ethylenically unsaturated group that can be polymerized with the acrylic monomers. Examples thereof include aromatic vinyl compounds such as styrene, α-methylstyrene, p-tert-butylstyrene, vinylnaphthalene, and vinylanthracene, vinyl sulfonic acid compounds such as vinyl sulfonate and styrene sulfonate, and vinyl pyridine compounds such as 2-vinylpyridine, 4-vinylpyridine, and naphthylvinylpyridine.

As the other acrylic monomer, a monomer having an aromatic group, such as styrene or benzyl (meth)acrylate, is particularly preferable from the viewpoint of compatibility with the pigment.

The acrylic resin (A) is dispersed in a water-soluble solvent and/or water, and may take various dispersion forms. Dispersion forms are roughly categorized into (1) dispersions in which the acrylic resin (A) is dispersed in an aqueous medium by using an emulsifier, and (2) dispersions in which the acrylic resin (A) having a hydrophilic group is dispersed in an aqueous medium.

Examples of the acrylic resin (A) dispersed in the aqueous medium by using an emulsifier (1) include an acrylic resin (A) water-dispersed by stirring the acrylic resin (A), an emulsifier, and water, and a product of emulsion-polymerizing the acrylic monomer in the presence of an emulsifier in an aqueous medium.

Examples of the emulsifier that can be used in water-dispersing the acrylic resin (A) by stirring and adding an emulsifier include nonionic emulsifiers such as polyoxyethylene alkyl ether, polyoxyethylene alkyl phenyl ether, and polyoxyethylene-polyoxypropylene copolymers, anionic emulsifiers such as alkyl sulfuric acid ester salt, alkyl benzene sulfonic acid salt, polyoxyethylene alkyl ether sulfuric acid ester salt, and polyoxyethylene alkyl phenyl ether sulfuric acid ester salt, and cationic emulsifiers such as quaternary ammonium salt. Relative to 100 parts by mass of the monomers, 20 parts by mass or less of the emulsifier is preferably used, and more preferably 5 to 15 parts by mass of the emulsifier is used since a print with excellent waterproofness is obtained.

As the emulsifier that can be used in conducting emulsion polymerization, any of the nonionic emulsifiers, anionic emulsifiers, and cationic emulsifiers listed as the emulsifiers that can be used in water-dispersing the acrylic resin (A) can be used. Preferably, 10 parts by mass or less of the emulsifier is used relative to 100 parts by mass of the monomers, and the amount is more preferably 2 to 5 parts by mass since a print with excellent waterproofness is obtained.

Among the emulsion polymerization methods described above, a radical emulsion polymerization method that uses a radical polymerization initiator is particularly convenient. Examples of the radical polymerization initiator used in this method include persulfates such as potassium persulfate, sodium persulfate, and ammonium persulfate, azo compounds such as 2,2'-azobisisobutyronitrile and dimethyl-2,2'-azobisisobutyrate, organic peroxides such as benzoyl peroxide and tert-butylperoxy-2-ethylhexanoate, and redox initiators such as a combination of an organic peroxide, such as cumene hydroperoxide, and a reducing agent such as iron oxide. The amount of these radical polymerization initiators used relative to the total mass of 100 parts by mass of the monomers is usually 0.01 to 5 parts by mass and is preferably 0.05 to 2 parts by mass.

In addition to the acrylic monomers, emulsifier, and radical polymerization initiator described above, if needed, various chain transfer agents, pH adjustors, and the like are used in combination so as to conduct emulsion polymerization for 0.1 to 10 hours in the temperature range of 5 to 100°C and preferably 50 to 90°C in 100 to 500 parts by mass of water relative to the total mass of 100 parts by mass of the monomers. As a result, the target acrylic resin (A) can be obtained.

Examples of the acrylic resin (A) having a hydrophilic group dispersed in an aqueous medium (2) among the acrylic resins (A) used in the present invention include those acrylic resins having a hydrophilic group such as an anionic group, a cationic group, or a nonionic group, dispersed in aqueous media.

Examples of the anionic group include a carboxyl group, a phosphoric acid group, an acidic phosphoric acid ester group, a phosphorous acid group, a sulfonic acid group, and a sulfinic acid group, and any of these groups is preferably used after being neutralized with a basic compound.

Examples of the basic compound used to neutralize the anionic group include methylamine, dimethylamine, trimethylamine, ethylamine, diethylamine, triethylamine, 2-aminoethanol, 2-dimethylaminoethanol, ammonia, sodium hydroxide, potassium hydroxide, tetramethylammonium hydroxide, tetra-n-butylammonium hydroxide, and trimethylbenzylammonium hydroxide.

Examples of the cationic group include a primary amino group, a secondary amino group, a tertiary amino group, and an ammonium hydroxide group. These groups are preferably neutralized with an acidic compound.

Examples of the acidic compound used to neutralize the cationic group include formic acid, acetic acid, propionic acid, lactic acid, phosphoric acid monomethyl ester, methanesulfonic acid, benzenesulfonic acid, dodecylbenzenesulfonic acid, hydrochloric acid, sulfuric acid, and nitric acid.

Examples of the nonionic group include groups having polyether chains such as polyoxyethylene and polyoxypropylene.

The acrylic resin (A) having a hydrophilic group can be produced by using an acrylic monomer having a hydrophilic group as a part of the other acrylic monomer used in the production method that involves copolymerizing a silane coupling agent having an ethylenically unsaturated group and the other acrylic monomer, for example.

Examples of the acrylic monomer having a hydrophilic group include various carboxyl-group-containing acrylic monomers and their alkali metal salts such as (meth)acrylic acid and 2-carboxyethyl (meth)acrylate, various tertiary-amino-group-containing (meth)acrylamides such as N,N-dimethyl(meth)acrylamide, and various tertiary-amino-group-containing (meth)acrylic acid esters and their quaternaried compounds such as dimethylaminoethyl (meth)acrylate. Among these, (meth)acrylic acid or dimethylaminoethyl (meth)acrylate is preferable. These can be used alone or in combination.

As the method for preparing the acrylic resin (A) having a hydrophilic group by using the acrylic monomers described above, various polymerization methods may be named. Among these, a solution radical polymerization method that uses an organic solvent is most convenient. Examples of the organic solvent used in this method include aliphatic and alicyclic hydrocarbons such as n-hexane, n-heptane, n-octane, cyclohexane, and cyclopentane; aromatic hydrocarbons such as toluene, xylene, and ethylbenzene; esters such as ethyl acetate, n-butyl acetate, n-amyl acetate, ethylene glycol monomethyl ether acetate, ethylene glycol monoethyl ether acetate, and ethylene glycol monobutyl ether acetate; alcohols such as methanol, ethanol, iso-propanol, n-butanol, iso-butanol, ethylene glycol monomethyl ether, ethylene glycol monoethyl ether, ethylene glycol mono-n-butyl ether, propylene glycol monomethyl ether, propylene glycol mono-n-propyl ether, and diethylene glycol monobutyl ether; ketones such as acetone, methyl ethyl ketone, methyl isobutyl ketone, methyl n-amyl ketone, and cyclohexanone; ethers such as dimethoxyethane, tetrahydrofuran, dioxane, ethylene glycol dimethyl ether, ethylene glycol dibutyl ether, diethylene glycol dimethyl ether, and diethylene glycol dibutyl ether; and N-methylpyrrolidone, dimethylformamide, dimethylacetamide, and ethylene carbonate. These can be used alone or in combination.

Various compounds can be used as the radical polymerization initiator in the solution radical polymerization method described above. Representative examples thereof include various azo compounds such as 2,2'-azobis(isobutylnitrile) and 2,2'-azobis(2,4-dimethylvaleronitrile); and various peroxides such as tert-butyl peroxypivalate, tert-butyl peroxybenzoate, and tert-butyl peroxy-2-ethylhexanoate.

When the monomers, polymerization initiators, and organic solvents mentioned above are used and a solution radical polymerization method is employed, a target acrylic resin (A) having a hydrophilic group can be prepared.

Various methods are available as the method for dispersing the acrylic resin (A) having a hydrophilic group in an aqueous medium; among these, a phase-inversion emulsification method is preferably used to conduct dispersing.

The phase-inversion emulsification method is a method that involves mixing an aqueous medium and an organic solvent solution of an acrylic resin (A) having a hydrophilic group neutralized with a basic compound or an acidic compound as needed, so as to disperse (phase inversion emulsification) the acrylic resin (A) in the aqueous medium, and then removing the organic solvent as needed. During this method, an emulsifier can be used as needed as long as the object of the present invention is achieved.

As the emulsifier, any of the nonionic emulsifiers, anionic emulsifiers, and cationic emulsifiers listed above as the emulsifier that can be used to water-disperse the acrylic resin (A) can be used.

The media listed as the water-soluble solvent and/or water described above can be used as the aqueous medium.

As the organic solvent, those organic solvents that are listed as the organic solvents that can be used in the solution radical polymerization of the acrylic resin (A) can be directly used. In particular, esters, ketones, and ethers are preferable. The aqueous medium may contain one or more organic solvents, and the ratio used in the aqueous medium is preferably 30% by mass or less, more preferably 15% by mass or less, yet more preferably 5% by mass or less, and most preferably zero. The ratio of the organic solvent is preferably 1% by mass or more if any organic solvent is used.

The acrylic resin (A) may be polymerized by decreasing the number of radicals generated from the polymerization initiator relative to the silane coupling agent having an ethylenically unsaturated group and the other acrylic monomer (vinyl monomers may also be used in combination) present in the polymerization system, for example. Examples of the method for decreasing the number of radicals generated includes (1) a method that involves decreasing the amount of the polymerization initiator used, (2) a method that involves performing polymerization at low temperature, and (3) a method that involves a longer polymerization time. Any one of or combination of these is effective. Specific examples of the method (2) that involves performing polymerization at low temperature include (i) a method of polymerization using a redox initiator at a polymerization temperature of 50°C or less in order to obtain an acrylic resin (A) dispersed in an aqueous medium by using a dispersing agent such as an emulsifier, and (ii) a method of polymerization at a polymerization temperature of 80°C or less in order to obtain an acrylic resin (A) dispersed in an aqueous medium, the acrylic resin (A) being an acrylic resin having a hydrophilic group.

The particle diameter of the acrylic resin (A) is not particularly limited. For example, particles having an average particle diameter in the range of 10 to 200 nm as measured by Microtrac Particle Size Analyzer UPA-EX150 produced by Nikkiso Co., Ltd., are preferable.

In addition, resins that are known to be other binders may also be used as long as the scope of the present invention is not impaired.

### (Method for producing aqueous pigment composition)

In the present invention, an aqueous pigment composition for pigment ink can be produced by a known method without specific limitations.

One example of such a method involves stirring and mixing the pigment, a pigment dispersing agent, water, the acrylic resin (A), and, if needed, various additives, dispersing and kneading the resulting mixture by using a disperser or a kneader such as a bead mill, an ultrasonic homogenizer, a high-pressure homogenizer, a paint shaker, a ball mill, a roll mill, a sand mill, a sand grinder, a Dyno mill, a Dispermat, an SC mill, a nanomizer, or the like, adding and mixing the rest of the materials thereto, and adjusting the viscosity to an appropriate level.

The composition can also be prepared by adding a water-soluble solvent and/or water, the acrylic resin (A), and, if needed, various additives to a self-dispersing pigment or a high-concentration dispersion (mill base) preliminarily prepared by using the disperser described above, mixing and stirring the resulting mixture, and diluting the resulting mixture to a desired viscosity.

The aqueous pigment composition of the present invention can be diluted to a desired concentration and used in various applications including pigment ink applications such as offset ink, gravure ink, flexo ink, and silk screen ink, inkjet recording ink applications, and automobile and building material paint applications.

In particular, when an acrylic resin of the present invention prepared by copolymerizing a silane coupling agent having an ethylenically unsaturated group and a polymerizable monomer having an amide group is used, the composition becomes suitable for use as an aqueous gravure ink, aqueous flexo ink, or aqueous inkjet ink for use with various printing paper such as art paper, coated paper, high-quality paper, special inkjet paper having absorbing layers for inkjet ink, and resin substrates (plates, sheets, and films are included) formed of hydrophobic resins such as polystyrene, acrylonitrile-butadiene-styrene copolymers (ABS resins), vinyl chloride such as soft vinyl chloride and hard vinyl chloride, polyethylene terephthalate (PET), polymethacrylate (PMMA), polypropylene, polyethylene, and polycarbonate.

### (Aqueous gravure ink)

When the aqueous pigment composition of the present invention is to be applied to aqueous gravure ink, a water-soluble solvent and/or water, a binder resin, etc., are further added, and if needed, a defoaming agent, a leveling agent, and other additives may be added to produce the ink.

### (Solvent for aqueous gravure ink)

Examples of the solvent used in the aqueous gravure ink of the present invention that contains water as a base include alcohols such as methyl alcohol, ethyl alcohol, isopropyl alcohol, and N-propyl alcohol, glycols such as ethylene glycol and propylene glycol, and glycol ethers such as butyl cellosolve, propylene glycol monomethyl ether, diethylene glycol monomethyl ether, diethylene glycol monoethyl ether, and diethylene glycol monobutyl ether.

### (Additives for aqueous gravure ink)

The aqueous gravure ink of the present invention may further contain, if needed, bases such as ammonia, triethylamine, aminomethylpropanol, monoethanolamine, diethylaminoethanol, sodium hydroxide, and potassium hydroxide, fine powdered silica such as gas-phase-method silica, wet-method silica, organically treated silica, and alumina-treated silica, other binder resins, a defoaming agent, a leveling agent, an antibacterial agent, an antifungal agent, a preservative, an adhesion-imparting agent, a wax, etc.

### (Use as aqueous gravure ink)

The obtained aqueous gravure ink is diluted to an appropriate viscosity at the time of printing, and printed on various printing paper and plastic films by a gravure printing technique. As the diluting solution, one or a mixture of water and a lower alcohol such as methanol, ethanol, normal propyl alcohol, or isopropyl alcohol can be used. The mass ratio for dilution is preferably 100:0 to 60:40 from the viewpoint of emission of volatile organic compounds.

The pigment in the aqueous gravure ink is preferably contained at a ratio of 1 to 50% by mass relative to the total mass of the ink since this amount is sufficient for ensuring the ink density and coloring power. In order for the acrylic resin (A) to obtain satisfactory gloss after printing and resin coating film properties, the resin solid content in the ink composition is preferably 5 to 50% by mass. If the resin solid content is less than 5% by mass, sufficient gloss and resin coating film properties cannot be obtained, and at a content exceeding 50% by mass, sufficient flowability and leveling properties are rarely obtained.

### (Aqueous ink for inkjet recording)

When the aqueous pigment composition of the present invention is to be applied to inkjet recording ink, a water-soluble solvent and/or water, other binder resins, etc., are further added, and a humectant (drying inhibitor), a penetrant, a surfactant, and other additives may be added according to the desirable physical properties to produce the ink.

After the ink is prepared, a centrifugal separation or filtration step may be added.

### (Humectant)

The humectant is added to prevent ink from drying. The humectant content in the ink in order to prevent drying is preferably 3 to 50% by mass. The humectant used in the present invention is not particularly limited, and a humectant that has miscibility with water and offers an effect of preventing the head of an inkjet printer from clogging is preferable. Examples thereof include glycerin, ethylene glycol, diethylene glycol, triethylene glycol, polyethylene glycol having a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. Among these, propylene glycol and 1,3-butyl glycol are preferably contained to offer safety and excellent effects on ink drying properties and discharge performance.

### (Penetrant)

The penetrant is added to improve the penetrating property into a recording medium and to adjust the dot diameter on a recording medium.

Examples of the penetrant include lower alcohols such as ethanol and isopropyl alcohol, ethylene oxide adducts of alkyl alcohols such as ethylene glycol hexyl ether and diethylene glycol butyl ether, and propylene oxide adducts of alkyl alcohols such as propylene glycol propyl ether.

The penetrant content in the ink is preferably 0.01 to 10% by mass.

### (Surfactant)

The surfactant is added to adjust the ink properties such as surface tension. The surfactants that can be used therefor are not particularly limited, and various anionic surfactants, nonionic surfactants, cationic surfactants, and amphoteric surfactants can be named as the example. Among these, anionic surfactants and nonionic surfactants are preferable.

Examples of the anionic surfactants include alkylbenzene sulfonic acid salts, alkylphenyl sulfonic acid salts, alkylnaphthalene sulfonic acid salts, higher aliphatic acid salts, sulfuric acid ester salts of higher aliphatic acid esters, sulfonic acid salts of higher aliphatic acid esters, sulfuric acid ester salts and sulfonic acid salts of higher alcohol ethers, higher alkyl sulfosuccinic acid salts, polyoxyethylene alkyl ether carboxylic acid salts, polyoxyethylene alkyl ether sulfuric acid salts, alkyl phosphoric acid salts, and polyoxyethylene alkyl ether phosphoric acid salts. Specific examples thereof include dodecylbenzene sulfonic acid salts, isopropylnaphthalene sulfonic acid salts, monobutylphenylphenol monosulfonic acid salts, monobutylbiphenyl sulfonic acid salts, and dibutylphenylphenol disulfonic acid salts.

Examples of the nonionic surfactants include polyoxyethylene alkyl ethers, polyoxyethylene alkyl phenyl ethers, polyoxyethylene aliphatic acid esters, sorbitan aliphatic acid esters, polyoxyethylene sorbitan aliphatic acid esters, polyoxyethylene sorbitol aliphatic acid esters, glycerin aliphatic acid esters, polyoxyethylene glycerin aliphatic acid esters, polyglycerin aliphatic acid esters, sucrose aliphatic acid esters, polyoxyethylene alkyl amines, polyoxyethylene aliphatic acid amides, aliphatic acid alkylolamides, alkyl alkanol amides, acetylene glycol, oxyethylene adducts of acetylene glycol, and polyethylene glycol-polypropylene glycol block copolymers. Among these, polyoxyethylene nonyl phenyl ether, polyoxyethylene octyl phenyl ether, polyoxyethylene dodecyl phenyl ether, polyoxyethylene alkyl ethers, polyoxyethylene aliphatic acid esters, sorbitan aliphatic acid esters, polyoxyethylene sorbitan aliphatic acid esters, aliphatic acid alkylolamides, acetylene glycol, oxyethylene adducts of acetylene glycol, and polyethylene glycol-polypropylene glycol block copolymers are preferable.

As other surfactants, the following can also be used: silicone surfactants such as polysiloxane oxyethylene adducts; fluorine surfactants such as perfluoroalkyl carboxylic acid salts, perfluoroalkyl sulfonic acid salts, and oxyethylene perfluoroalkyl ethers; and bio-surfactants such as spiculisporic acid, rhamnolipid, and lysolecithin.

These surfactants can be used alone or as a mixture of two or more. Considering the dissolution stability of the surfactants, etc., the HLB is preferably in the range of 7 to 20. When a surfactant is to be added, the amount of the surfactant added relative to the total mass of the ink is preferably in the range of 0.001 to 2% by mass, more preferably in the range of 0.001 to 1.5% by mass, and yet more preferably in the range of 0.01 to 1% by mass. When the amount of the surfactant added is less than 0.001% by mass, the effects of adding the surfactant are not likely to be obtained, and at a content exceeding 2% by mass, issues such as image blurring readily occur.

### (Other additives)

If needed, a preservative, a viscosity adjusting agent, a pH adjusting agent, a chelating agent, a plasticizer, an antioxidant, an ultraviolet absorber, etc., can be added.

### (Use as inkjet recording ink)

The amount of the pigment in the inkjet recording ink is preferably 1 to 20% by mass from the viewpoint of necessity of obtaining a sufficient image density and in order to obtain pigment's dispersion stability in the ink. The amount of the acrylic resin (A) contained in the inkjet ink composition is preferably 3 to 15% by mass, more preferably 5 to 12% by mass, and most preferably 7 to 10% by mass on a resin solid content basis in order to obtain good gloss after printing and resin coating film properties. At a content less than 3% by mass, sufficient gloss and resin coating film properties cannot be obtained. At a content more than 12% by mass, nozzles of an inkjet printer clog due to drying of the ink near the nozzles and thus such a content is not suitable.

### EXAMPLES

The present invention will now be described in detail through Examples. The present invention is not limited by Examples below within the gist of the present invention. In examples below, "g" and "% by mass" are on a mass basis unless otherwise noted.

### (Synthetic Example 1: method for producing acrylic resin (A-1))

Into a four-necked flask equipped with a stirrer, a thermometer, a condenser, and a nitrogen inlet tube, 16 g of Newcol 707SF (anionic emulsifier produced by Nippon Nyukazai Co., Ltd.), 6.5 g of NOIGEN TDS-200D (nonionic emulsifier produced by DKS Co., Ltd.), and 220 g of deionized water were placed. The resulting mixture was heated to 80°C under a nitrogen stream, and an aqueous solution prepared by dissolving 0.8 g of ammonium persulfate in 16 g of deionized water was added thereto. A mixed liquid containing 60 g of 2-ethylhexyl acrylate, 100 g of styrene, 27 g of methyl methacrylate, 0.4 g of 3-methacryloxypropyltrimethoxysilane, 3 g of acrylamide, and 6 g of methacrylic acid was added thereto dropwise over 3 hours. After completion of dropwise addition, the reaction was carried out for 2 hours, and the resulting product was cooled to 25°C, neutralized with 1.5 g of a 28% by mass ammonia water, and combined with deionized water so that the non-volatile component content was 45% by mass. As a result, an acrylic resin water dispersion (A-1) having a glass transition temperature (Tg) of 30°C and an average particle diameter of 60 nm was obtained.

### (Synthetic Examples 2 and 3: method for producing acrylic resins (A-2 and A-3))

Synthesis was conducted on the same scale as Synthetic Example 1 except that the amounts of the materials placed in terms of % by mass were as shown in Table 1. As a result, acrylic resin-based resin water dispersions (A-2 and A-3) were obtained. The unit of the figures in the table is % by mass.

### (Comparative Synthetic Examples 1 to 5: method for producing acrylic resins (HA-1 to HA-5))

Synthesis was conducted on the same scale as Synthetic Example 1 and Synthetic Example 2 except that the amounts of the materials placed in terms of % by mass were as shown in Table 1. As a result, acrylic resin-based resin water dispersions (HA-1 to HA-5) were obtained. The unit of the figures in the table is % by mass.

**[Table 1]**

| Table 1 | | Synthetic Example 1 | Synthetic Example 2 | Synthetic Example 3 |
|---|---|---|---|---|
| Resin sample | | A-1 | A-2 | A-3 |
| Resin composition | Styrene | 53.4 | 53.4 | 53.3 |
| | 2-Ethylhexyl acrylate | 30.9 | 30.9 | 30.8 |
| | Methyl methacrylate | 11.0 | 9.5 | 10.9 |
| | Acrylamide | 1.5 | 3.0 | 1.5 |
| | Methacrylic acid | 3.0 | 3.0 | 3.0 |
| | 3-Methacryloxypropyl-trimethoxysilane | 0.2 | 0.2 | 0.5 |
| | Total | 100.0 | 100.0 | 100.0 |
| | Glass transition temperature (Tg) | 30°C | 35°C | 35°C |
| | Average particle diameter | 60 nm | 60 nm | 50 nm |

**[Table 2]**

| Table 2 | | Comparative Synthetic Example 1 | Comparative Synthetic Example 2 | Comparative Synthetic Example 3 | Comparative Synthetic Example 4 | Comparative Synthetic Example 5 |
|---|---|---|---|---|---|---|
| Resin sample | | HA-1 | HA-2 | HA-3 | HA-4 | HA-5 |
| Resin composition | Styrene | 53.5 | 53.4 | 53.5 | 53.4 | 52.4 |
| | 2-Ethylhexyl acrylate | 31.0 | 30.9 | 31.0 | 30.9 | 30.4 |
| | Methyl methacrylate | 12.5 | 12.5 | 11.0 | 7.5 | 10.8 |
| | Acrylamide | 0.0 | 0.0 | 1.5 | 5.0 | 1.5 |
| | Methacrylic acid | 3.0 | 3.0 | 3.0 | 3.0 | 2.9 |
| | 3-Methacryloxypropyltrimethoxysilane | 0.0 | 0.2 | 0.0 | 0.2 | 2.0 |
| | Total | 100.0 | 100.0 | 100.0 | 100.0 | 100.0 |
| | Glass transition temperature (Tg) | 35°C | 34°C | 35°C | 35°C | 35°C |
| | Average particle diameter | 45 nm | 50 nm | 50 nm | Broad | 55 nm |

### (Method for producing pigment dispersion)

### (Method for producing pigment dispersion J1)

Into a 200 ml polyethylene bottle, 25 g of TEGO Disperse 750W (solid content: 40% by mass) produced by EVONIK Industries as a pigment dispersing agent, 15 g of diethylene glycol monobutyl ether, 15 g of triethylene glycol, 35 g of distilled water, 10 g of carbon black #960 produced by Mitsubishi Chemical Corporation, and 150 g of 0.5 mm zirconia beads were placed, and the resulting mixture was dispersed for 4 hours with a paint conditioner. As a result, a pigment dispersion (J1) was obtained.

### (Method for producing pigment dispersion J2)

A commercially available pigment dispersion, CAB-O-JET300 produced by Cabot Japan, was used as a pigment dispersion (J2).

### (Method for producing pigment dispersion J3)

### <Synthesis of styrene-(meth)acrylic acid copolymer>

Into a reactor of an automatic polymerization apparatus (polymerization tester DSL-2AS model produced by Todoroki Sangyo Co., Ltd.) equipped with a stirrer, a dropping device, a temperature sensor, and a refluxing device equipped with a nitrogen introducing device in an upper part, 1,200 g of isopropyl alcohol (IPA) was placed, and the interior of the reactor was purged with nitrogen under stirring. The temperature was elevated to 80°C while maintaining a nitrogen atmosphere in the reactor, and then a mixed liquid containing 75.0 g of 2-hydroxyethyl methacrylate, 260.8 g of methacrylic acid, 400.0 g of styrene, 234.2 g of benzyl methacrylate, 30.0 g of glycidyl methacrylate, and 80.0 g of PERBUTYL (registered trademark) O (active ingredient: t-butyl peroxy 2-ethylhexanate, produced by NOF Corporation) was added dropwise from the dropping device over 4 hours. After completion of dropwise addition, the reaction was continued at the same temperature for 15 hours, and then a portion of IPA was distilled away under a reduced pressure to control the solid component content to 42.5%. As a result, a styrene-(meth)acrylic acid copolymer (B) having an acid value of 170 was obtained.

### <Preparation of pigment dispersion J3>

Into a mixing tank equipped with a cooling jacket, 360 g of Fastogen Blue TGR (β-type copper phthalocyanine pigment (C.I. Pigment Blue 15:3) produced by DIC Corporation), 170 g of styrene-(meth)acrylic acid copolymer (B), 61 g of a 25% aqueous sodium hydroxide solution, 83 g of isopropyl alcohol, and 1000 g of ion exchange water were placed, and the resulting mixture was stirred and mixed with a three-one motor for 1 hour. The resulting mixture was sent through a dispersing apparatus filled with zirconia beads having a diameter of 0.3 mm (SC Mill SC 100/32 Model, produced by Mitsui Mining Co., Ltd.) and dispersed by a circulation mode (a mode with which the dispersion discharged from the dispersing apparatus was returned to the mixing tank). During the dispersing step, the temperature of the dispersion was controlled to 30°C or lower by causing cold water to pass through the cooling jacket, and dispersing was conducted for 4 hours by fixing the rotor peripheral speed of the dispersing apparatus to 11.25 m/sec. After completion of dispersing, the dispersion raw liquid was removed from the mixing tank, the mixing tank and the dispersing apparatus channels were washed with 1500 g of water, and the water was combined with the dispersion raw liquid to obtain a mill dispersion.

The mill dispersion was placed in a glass distillator, and all of isopropyl alcohol and a portion of water were distilled away. The resulting mixture was allowed to cool to room temperature, 2% hydrochloric acid was added dropwise under stirring to control pH to 3.5, and then the solid component was filtered out with a Nutsche type filter and washed with water.

The wet cake was placed in a container, a 25% aqueous sodium hydroxide solution was added to control pH to 9.0, and re-dispersing was conducted with a disper (T.K. HOMODISPER 20 Model, produced by Tokushu Kika Kogyo Co., Ltd.). After a centrifugal separation step (6000 G, 30 minutes), ion exchange water was added to obtain a pigment dispersion (J3) having a solid content of 18%.

### (Example 1: Method for producing aqueous pigment ink)

A black pigment ink was prepared by adding 20 g of the acrylic resin water dispersion (A-1) obtained in Synthetic Example 1, 20 g of distilled water, and 10 g of propylene glycol to 50 g of the pigment dispersion (J1) as the pigment dispersion, and stirring the resulting mixture.

### (Example 2: Method for producing aqueous pigment ink)

An aqueous pigment ink was obtained as in Example 1 except that the composition was as shown in Table 3.

### (Examples 3 and 4: Method for producing aqueous pigment ink)

An aqueous pigment ink was obtained as in Examples 1 and 2 except that the composition was as shown in Table 3. Nipacide IB produced by Clariant was used as a preservative, and TEGO WET KL 245 produced by EVONIK Industries was used as a surfactant.

### (Comparative Examples 1 to 5: Method for producing aqueous pigment ink)

An aqueous pigment ink was obtained as in Examples except that the composition was as shown in Table 4.

### (Evaluation method)

### (Test printing 1)

Aqueous pigment inks obtained in Examples and Comparative Examples were applied onto art paper "OK Kinfuji Plus" produced by Oji Paper Co., Ltd., by using a bar coater #4, and dried for 30 seconds in a dryer at 60°C so as to obtain prints.

### (Wet rubfastness test)

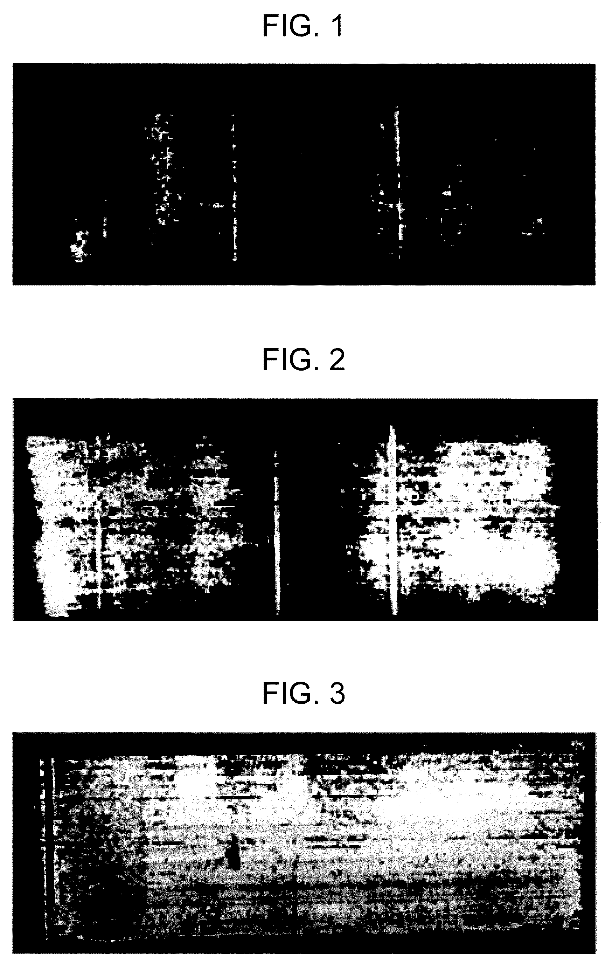

"Bemcot AP-2" produced by OZU CORPORATION was fixed to a head portion of "Rubbing Tester" produced by Taisei Rikagaku Kogyo, impregnated with 100 µL of distilled water, and reciprocated to-and-fro ten times under a 500 g load on each of the prints obtained in Test Printing 1 so as to rub the prints. Evaluation was conducted by visual inspection of images on art paper shown in Figs. 1 to 3. Since the degree of rubbing in this test is stronger than typically expected, a moderate degree of image exfoliation still indicates good results.

### (Re-dissolving test)

Each of the obtained aqueous pigment inks of Examples and Comparative Examples was applied to a slide glass to a thickness of 4 µm by using a bar coater and dried for 1 hour in a dryer at 32°C to prepare a test plate. The test plate was immersed in 35 g of a test solution containing 20 g of distilled water and 10 g of propylene glycol for 5 minutes at room temperature, the slide glass was reciprocated 10 times in the test solution, and whether re-dissolving occurs was confirmed by visual inspection.

Samples in which no coloring components were found on the recovered slide glass and a moderate amount of insoluble residue was observed in the test solution were rated "Good: AA". Samples in which a large amount of insoluble matter was found on the slide glass or in the test solution and no coloring of the test solution was observed were rated "Poor: F". Evaluation was made based on this criteria in the tables.

### (Inkjet printing test)

Each of the obtained aqueous pigment inks was printed on regular paper (npi high-grade) produced by NIPPON PAPER INDUSTRIES CO., LTD., by using a commercially available inkjet printer PX-105 produced by Seiko Epson Corporation to check whether printing can be conducted smoothly.

**[Table 3]**

| Table 3 | Example 1 | Example 2 | Example 3 | Example 4 | Example 5 |
|---|---|---|---|---|---|
| Resin sample | A-1 | A-1 | A-1 | A-2 | A-3 |
| AM content in resin | 1.5 | 1.5 | 1.5 | 3 | 1.5 |
| SC content in resin | 0.2 | 0.2 | 0.2 | 0.2 | 0.5 |
| Amount of resin sample (g) | 20 | 22 | 22 | 21 | 21 |
| Pigment dispersion / amount (g) | J1/50 | J2/15 | J3/34 | J3/34 | J3/34 |
| Distilled water | 20 | 33 | 16.0 | 16.0 | 16.3 |
| Propylene glycol | 10 | 30 | 13 | 13 | 13 |
| Triethylene glycol | - | - | 5 | 5 | 5 |
| Glycerin | - | - | 10 | 10 | 10 |
| Triethanol amine | - | - | 0.2 | 0.2 | 0.2 |
| Nipacide IB | - | - | 0.1 | 0.1 | 0.1 |
| Tego WET KL 245 | - | - | 0.4 | 0.4 | 0.4 |
| Total | 100 | 100 | 100 | 100 | 100 |
| Wet rubfastness | AA | AA | AA | AA | AA |
| Re-dissolving property | AA | AA | AA | AA | AA |

**[Table 4]**

| Table 4 | Comparative Example 1 | Comparative Example 2 | Comparative Example 3 | Comparative Example 4 | Comparative Example 5 |
|---|---|---|---|---|---|
| Resin sample | HA-1 | HA-2 | HA-3 | HA-4 | HA-5 |
| AM content in resin | 0 | 0 | 1.5 | 5.0 | 1.5 |
| SC content in resin | 0 | 0.2 | 0 | 0.2 | 2.0 |
| Amount of resin sample (g) | 21 | 21 | 21 | 24 | 21 |
| Pigment dispersion / amount (g) | J3/34 | J3/34 | J3/34 | J3/34 | J3/34 |
| Distilled water | 16.2 | 16.1 | 16.4 | 13.2 | 16.3 |
| Propylene glycol | 13 | 13 | 13 | 13 | 13 |
| Triethylene glycol | 5 | 5 | 5 | 5 | 5 |
| Glycerin | 10 | 10 | 10 | 10 | 10 |
| Triethanol amine | 0.2 | 0.2 | 0.2 | 0.2 | 0.2 |
| Nipacide IB | 0.1 | 0.1 | 0.1 | 0.1 | 0.1 |
| Tego WET KL 245 | 0.4 | 0.4 | 0.4 | 0.4 | 0.4 |
| Total | 100 | 100 | 100 | 100 | 100 |
| Wet rubfastness | AA | AA | B | B | B |
| Re-dissolving property | F | F | F | F | F |

### Brief Description of Drawings

[Fig. 1] Fig. 1 is a photograph of a print evaluated in Examples (wet rubfastness test). The state shown in Fig. 1 is rated good (AA).
[Fig. 2] Fig. 2 is a photograph of a print evaluated in Examples (wet rubfastness test). The state shown in Fig. 2 is rated insufficient (B).
[Fig. 3] Fig. 3 is a photograph of a print evaluated in Examples (wet rubfastness test). The state shown in Fig. 3 is rated poor (F).

## Claims

1. An aqueous pigment composition comprising a pigment, water, and an acrylic resin obtained by copolymerizing a silane coupling agent having an ethylenically unsaturated group and a polymerizable monomer having an amide group, wherein, relative to a total amount of monomers used in copolymerization, the acrylic resin uses 0.05% by mass or more and not more than 2% by mass of the silane coupling agent having an ethylenically unsaturated group, and 0.5% by mass or more and not more than 5% by mass of the polymerizable monomer having an amide group.

2. The aqueous pigment composition according to Claim 1, wherein the acrylic resin is dispersed in a water-soluble solvent and/or water by using an emulsifier and has an average particle diameter in the range of 10 to 200 nm.

3. The aqueous pigment composition according to Claim 1 or 2, wherein an amount of the acrylic resin relative to a total amount of the aqueous pigment composition is 7 to 10% by mass.

4. A pigment ink that uses the aqueous pigment composition according to any one of Claims 1 to 3.
